# EUROPÄISCHE PATENTSCHRIFT

(11) **EP 0 862 347 B1**
(45) Veröffentlichungstag und Bekanntmachung des Hinweises auf die Patenterteilung: **20.10.2004**
(21) Anmeldenummer: 97121814.4
(22) Anmeldetag: 11.12.1997
(51) Int. Cl.: H04Q 11/04

(54) **Verfahren und Vorrichtung zur Übertragung von alphanumerischen Zeichen zwischen wenigstens zwei Telekommunikations-Endeinrichtungen**
Method and device for transmission of alphanumeric characters between at least two telecommunication terminals
Méthode et dispositif pour la transmission des caractères alphanumériques entre au moins deux terminaux de télécommunications

(30) Priorität: 27.02.1997 DE 19707878
(43) Veröffentlichungstag der Anmeldung: 02.09.1998
(73) Patentinhaber: Deutsche Telekom AG, 53113 Bonn (DE)
(72) Erfinder: Adam, Christof, 64859 Eppertshausen (DE); Bandow, Gerhard, 64347 Griesheim (DE)

(56) Entgegenhaltungen:
- EP-A- 0 555 014
- FR-A- 2 663 484

## Beschreibung

Die Erfindung betrifft ein verfahren zur Übertragung von alphanumerischen Zeichen zwischen wenigstens zwei Telekommunikations-Endeinrichtungen, von denen wenigstens eine an einem ISDN-Telekommunikationsnetz angeschaltet ist, gemäß Anspruch 1, eine an ein ISDN-Kommunikationsnetz anschaltbare drahtgebundene Telekommunikations-Endeinrichtung gemäß Anspruch 8, eine an ein ISDN-Netz anschaltbare schnurlose Kommunikationsvorrichtung nach Anspruch 11 sowie eine zentrale Kommunikationsvorrichtung nach Anspruch 14, die allesamt der Durchführung des Verfahrens dienen.

Heutige Kommunikationsnetzwerke sind in der Lage, neben dem herkömmlichen Sprachdienst auch Daten, Bild- und Textinformationen zu übertragen. Dabei hat es sich herausgestellt, daß insbesondere das Verschicken von kurzen Textmitteilungen immer beliebter wird, da ein Kunde gewöhnlich nicht gleich zum Telefonhörer greifen will, wenn er nur eine Kurzmitteilung übermitteln möchte.

Aus dem Mobilfunkbereich ist ein Kurznachrichtendienst bekannt, im Englischen auch SMS (Short Message Service) genannt. Der in den ETSI-Standards ETS 300069, 300537 und 305536 definierte Dienst ist für den Nachrichtenversand von und zu Mobilfunkteilnehmern innerhalb des Mobilfunknetzes entwickelt worden.

Darüber hinaus ist es bekannt, kurze Texte im Euro-ISDN-Netz mit Hilfe des Dienstmerkmals UUS1 (User-tc-User Signalling) von Endgerät zu Endgerät zu übertragen. Ein Nachteil des Dienstmerkmals UUS1 ist darin zu sehen, daß bei der Übertragung von Textinformationen eine vollständige leitungsvermittelte ISDN-Verbindung aufgebaut wird; d. h. neben einem Steuerkanal, auch D-Kanal genannt, werden bei einem Basisanschluß wenigstens zwei ein Nutzkanal, auch B-Kanal genannt, aufgebaut. Ein weiterer Nachteil ist darin zu sehen, daß mit Hilfe des Dienstmerkmals UUS1 eine netzübergreifende Übertragung von Textinformationen, beispielsweise vom ISDN-Netz auf das GSM-Mobilfunknetz (GSM von Global System for Mobile Communication) nicht möglich ist. Auch die von UUS1 zur Verfügung gestellte Übertragungskapazität von zur Zeit 32 Byte reicht für eine Vielzahl von Anwendungen nicht aus.

Die EP-A-0 555 014 offenbart ein solches Verfahren zum Übertragen von Nachrichten über ein Telekommunikationsnetz mit Hilfe des vorbeschriebenen Dienstmerkmals UUS zwischen einer nicht-ISDNfähigen Kundenendeinrichtung, auch CPE (Customer Premines Equipment) genannt, und einer ISDN-fähigen, speziell angepassten Kundendeinrichtung. Im einzelnen ist offenbart, dass zunächst von der nicht-ISDN-fähigen Endeinrichtung, wie beispielsweise einem Telefon, eine Zielrufnummer zu einer "Nachrichtenübersetzungsplattform" eingegeben wird, woraufhin eine voll funktionsfähige Rufverbindung aufgebaut und ein nicht-ISDN-kompatibles Signal, welches Information beinhaltet, die der Rufende an eine bestimmte zweite, jedoch ISDNfähige Endeinrichtung senden will, an diese Plattform übertragen wird. Die Plattform führt alle notwendigen Schritte zur Umsetzung der empfangenen nicht-ISDN-fähige Information in eine ISDN übertragbare Information durch, die als UUS innerhalb einer Nachricht gemäß dem Standard Q.931 eingebettet und über den D-Kanal an die zu rufende Endeinrichtung übertragen wird. Folglich kann der vollständige Aufbau eines B-Kanals nur, wenn die Einbettung innerhalb einer Q.931 Set-up-Nachricht erfolgt, von der gerufenen empfängerseitigen, jedoch entsprechend vorprogrammierten ISDN-Endeinrichtung aktiv unterbunden werden.

Der Erfindung liegt daher die Aufgabe zugrunde, ein Verfahren, eine drahtgebundene, eine schnurlose und eine zentrale Telekommunikations-Endeinrichtung bereitzustellen, mit denen größere Mengen an alphanumerischen Informationen über ein ISDN-Netz übertragen werden können, das zudem effektiver genutzt werden kann.

Eine weitere Aufgabe besteht darin, eine netzübergreifende Übertragung von alphanumerischen Informationen zu ermöglichen.

Diese technisch zusammenhängenden Probleme löst die Erfindung einmal mit den Verfahrensschritten des Verfahrensanspruchs 1, den Merkmalen des Anspruchs 8, den Merkmalen des Anspruchs 11 und zum anderen mit den Merkmalen, des Anspruchs 14.

Ein Hauptgedanke der Erfindung liegt darin, Kurznachrichten insbesondere zwischen zwei an ein ISDN-Netz angeschalteten Telefonen zu übertragen, wie es bereits im GSM-Mobilfunknetz mit Hilfe des SMS-Dienstleistungsmerkmals möglich ist. Die Erfindung schlägt daher als Lösung vor, insbesondere den Kurznachrichtendienst SMS auch für das ISDN-Netz verfügbar zu machen.

Die Erfindung lehrt dazu ein Verfahren zur Übertragung von alphanumerischen Zeichen zwischen wenigstens zwei Telekommunikations-Endeinrichtungen, von denen wenigstens eine an ein ISDN-Telekommunikationsnetz angeschaltet ist. Das Verfahren ist dadurch gekennzeichnet, daß zunächst eine oder mehrere Zielrufnummern und eine ein oder mehrere alphanumerische Zeichen umfassende Information an einer Endeinrichtung eingegeben werden. Die eingegebene Information wird codiert und in ein vorbestimmtes Übertragungsformat, das über einen ISDN-Steuerkanal übertragen werden kann, umgesetzt. Nachdem eine ISDN-Steuerkanal-Verbindung wenigstens zu einer Endeinrichtung aufgebaut worden ist, wird die umgesetzte Information wenigstens zu einer Endeinrichtung übertragen. In der oder jeder gerufenen Endeinrichtung wird die alphanumerische Information decodiert und optisch und/oder akustisch dem Nutzer dargestellt. Bereits an dieser Stelle sei erwähnt, daß das erfindungsgemäße Verfahren die Übermittlung von alphanumerischen Zeichen nicht nur zwischen zwei oder mehreren, an das ISDN-Netz angeschalteten Telekommunikations-Endeinrichtungen, sondern auch zwischen einer oder mehreren an das ISDN-Netz angeschalteten Endeinrichtungen und einer oder mehreren Mobilfunk-Endeinrichtungen ermöglicht.

Um eine netzübergreifende Übermittlung von Textinformationen zwischen dem ISDN-Netz und einem Mobilfunknetz zu ermöglichen, wird die eingegebene alphanumerische Information gemäß dem aus dem GSM-Standard für Mobilfunknetze bekannten Kurznachrichtendienst SMS codiert. Der SMS-Dienst besitzt nämlich im Punkt-zu-Punkt-Übertragungsmodus eine Datenblocklänge von 140 Bytes und im Punkt-zu-Mehrpunkt-Modus noch eine Datenblocklänge von 82 Bytes.

Damit die SMS-codierte Informationen gegenüber dem UUS 1-Dienst effizienter über das ISDN-Netz übertragen werden können, werden sie in ein durch das USBS-Protkoll definiertes Übertragungsformat umgesetzt. USBS ( engl.: User Signaling Bearer Service) ist ein bekanntes, aber zur Zeit noch nicht implementiertes Dienstleistungsmerkmal des Euro-ISDN. Da das USBS-Dienstleistungsmerkmal die transparente und paketorientierte Übermittlung von Daten mit einer Länge von bis zu 252 Bytes zwischen zwei Anschlüssen erlaubt, können die SMS-codierten alphanumerischen Zeichen auf das USBS-Übertragungsformat abgebildet werden. Die effizientere Netzausnutzung ist darauf zurückzuführen, daß zur Übertragung von Textinformationen lediglich eine ISDN-D-Kanalverbindung zwischen den Teilnehmern aufgebaut wird, wohingegen der UUS 1-Dienst einen vollständigen ISDN-Verbindungsaufbau von Nutz- und Steuerkanälen erfordert.

Gemäß einer vorteilhaften Weiterbildung können Kurzmitteilungen von einer an das ISDN-Netz angeschalteten Endeinrichtung zu einer Mobilfunk-Endeinrichtung und umgekehrt übertragen werden. Zunächst sei der Fall angenommen, daß eine SMS-Kurzmitteilung von einer Mobilfunk-Endeinrichtung an eine an das ISDN-Netz angeschaltete Endeinrichtung gesendet werden soll. Die an der Mobilfunk-Endeinrichtung eingegebene und anschließend SMS-codierte alphanumerische Information wird vorzugsweise in ein GSM-Übertragungsformat umgesetzt und über das Mobilfunknetz zu einer zentralen Einrichtung, die eine ISDN-Einrichtung sein kann, übertragen. Die zentrale Einrichtung ist derart ausgebildet, daß sie das, die SMS-codierte Information enthaltene GSM-Übertragungsformat in ein USBS-Übertragungsformat umsetzen kann. Unter Anwendung des USBS-Dienstleistungsmerkmals wird eine logische Verbindung über einen ISDN-Steuerkanal, auch D-Kanal genannt, zur gerufenen Endeinrichtung aufgebaut, über den das USBS-Übertragungsformat übertragen wird. Die im USBS-Übertragungsformat empfangene, SMS-codierte Textinformation wird decodiert und in optischer und/oder akustischer Weise dem Nutzer dargestellt. In umgekehrter Übertragungsrichtung setzt die zentrale Einrichtung das über den Steuerkanal des ISDN-Netzes empfangene USBS-Übertragungsformat in ein GSM-Übertragungsformat um, und sendet es über das Mobilfunknetz zur gerufenen Mobilfunk-Endeinrichtung.

Eine an ein ISDN-Kommunikationsnetz anschaltbare, drahtgebundene Telekommunikations-Endeinrichtung weist einen Codierer auf, der eine eingegebene, ein oder mehrere Zeichen umfassende alphanumerische Information gemäß dem Kurznachrichten (SMS)-Dienstleistungsmerkmal codiert. Darüber hinaus umfaßt sie eine Einrichtung zum Umsetzen der SMS-codierten Information in ein USBS-Übertragungsformat, so daß die codierte Information über einen ISDN-Steuerkanal übertragbar ist, eine Decodiereinrichtung, die aus einer im USBS-Übertragungsformat empfangenen, SMS-codierten Information die ursprüngliche alphanumerische Information wiedergewinnt, sowie eine Einrichtung zur optischen und/oder akustischen Wiedergabe der alphanumerischen Information.

Ein Speicher ist vorgesehen, um beispielsweise die von einer rufenden Endeinrichtung erhaltene alphanumerische Information speichern zu können.

Eine Steuereinrichtung dient dazu, unter Ansprechen auf die gespeicherte alphanumerische Information einen vorbestimmten Vorgang auszulösen. Stellt die gespeicherte Information eine Rufnummer dar, so kann die Steuereinrichtung einen Verbindungsaufbau zu dem dazugehörenden Teilnehmer einleiten.

Anstatt an das ISDN-Netz eine drahtgebundene Telekommunikations-Endeinrichtung anzuschalten, kann ebenso eine schnurlose Endeinrichtung angeschaltet sein.

Eine solche Vorrichtung umfaßt eine Basisstation, die einen Netzanschluß zum Anschalten an das ISDN-Telekommunikationsnetz und eine Einrichtung zum Umsetzen eines USBS-Übertragungsformats in ein DECT-Übertragungsformat und umgekehrt aufweist. Darüber hinaus weist die Vorrichtung eine mit der Basisstation in Funkverbindung stehende, schnurlose Endeinrichtung auf, die folgende Merkmale umfaßt:
1) einen Codierer, der eine eingegebene alphanumerische Information gemäß dem Kurznachrichten-Dienst SMS codiert,
2) eine Einrichtung zum Umsetzen der codierten Information in ein DECT-Übertragungsformat, so daß die codierte Information über einen Funkkanal zur Basisstation übertragbar ist,
3) eine Decodiereinrichtung, die aus einer im DECT-Übertragungsformat von der Basisstation erhaltenen, SMS-codierten Information die ursprüngliche alphanumerische Information wiedergewinnt, und
4) eine Einrichtung zur optischen und/oder akustischen Wiedergabe der rückgewonnenen alphanumerischen Information.

Damit eine SMS-codierte alphanumerische Information zwischen wenigstens einer, an ein ISDN-Netz angeschalteten Endeinrichtung und wenigstens einer, mit einem Mobilfunknetz verbundenen Endeinrichtung übertragen werden kann, ist eine zentrale Kommunikationsvorrichtung vorgesehen, die eine Schnittstelle zum Anschalten an das ISDN-Netz und eine Schnittstelle zum Anschalten an das GSM-Netz aufweist.

Zur Rundsendung von alphanumerischen Informationen enthält die zentrale Kommunikanionsvorrichtung eine Speichereinrichtung zum Ablegen von einer oder mehreren alphanumerischen Informationen und /oder einer oder mehreren Zielrufnummern sowie eine Steuereinrichtung, die unter Ansprechen auf eine oder mehrere gespeicherte Zielrufnummer jeweils einen Verbindungsaufbau zu jedem, der jeweiligen Zielrufnummer zugeordneten Teilnehmer einleitet.

Um an der zentralen Kommunikationsvorrichtung uncodierte alphanumerische Informationen zur Übertragung über das ISDN-Netz eingeben zu können, ist ein Codierer, der eine eingegebene, ein oder mehrere Zeichen umfassende alphanumerische Information gemäß dem Kurznachrichten-Dienst-Standard (Short Message Service; SMS) codiert, und eine zweite Einrichtung zum Umsetzen der codierten Information in ein USBS-Übertragungsformat, so daß die codierte Information über einen ISDN-Steuerkanal übertragbar ist, vorgesehen.

Die Erfindung wird nachfolgend anhand der Ausführungsbeispiele in Verbindung mit den Zeichnungen näher erläutert. Es zeigen:
- Fig. 1: ein vereinfachtes Blockschaltbild eines ISDN-Netzwerkes und eines Mobilfunknetzes, über die erfindungsgemäß alphanumerische Zeichen übertragen werden können,
- Fig. 2: den prinzipiellen Aufbau einer drahtgebundenen Endeinrichtung gemäß der Erfindung, die an das in Fig. 1 gezeigte ISDN-Netz angeschaltet ist,
- Fig. 3: das prinzipielle Blockschaltbild eines schnurlosen Telefons gemäß der Erfindung, das über eine Basisstation an das in Fig. 1 gezeigte ISDN-Netz angeschaltet ist, und
- Fig. 4: ein Blockschaltbild der in Fig. 1 gezeigten zentralen Einrichtung, die eine netzübergreifende Übertragung der SMS-codierten Information ermöglicht.

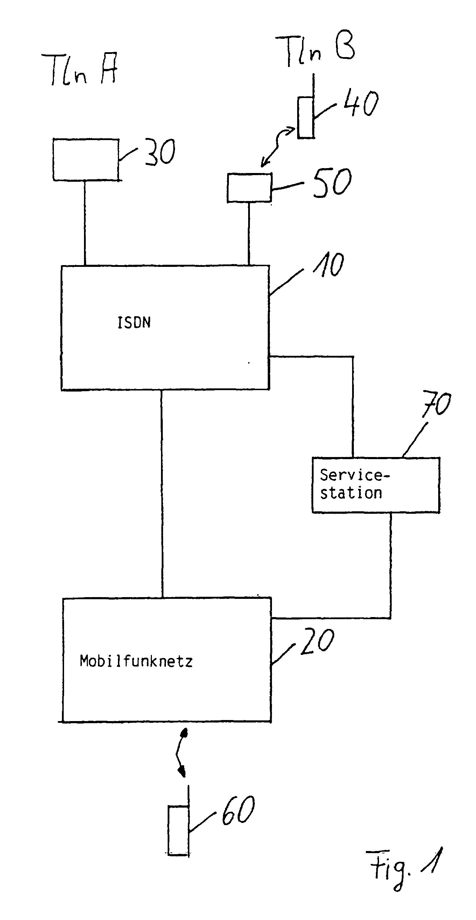

In Fig. 1 sind vereinfacht ein ISDN-Netz 10 sowie ein Mobilfunknetz 20 dargestellt, die jeweils zur Übertragung von alphanumerischen Zeichen ausgebildet sind, die gemäß dem, für Mobilfunknetze bekannten Kurznachrichtendienst-Leistungsmerkmal, auch Short Message Service (SMS) genannt, codiert sind. Das mit 10 bezeichnete ISDN-Netz enthält alle erforderlichen Verbindungsstrecken und Vermittlungsstellen, die zur Informationsübertragung erforderlich sind. An das ISDN-Netz 10 ist beispielsweise eine drahtgebundene Endeinrichtung 30, in unserem Beispiel ein Telefon, über eine bei einem Teilnehmer A installierte Teilnehmeranschlußeinrichtung angeschaltet. Ferner ist über eine bei einem Teilnehmer B installierte Teilnehmeranschlußeinrichtung ein schnurloses Telefon 40 über eine ihm zugeordnete Basisstation 50 mit dem ISDN-Netz 10 verbunden. Selbstverständlich können beliebig viele Endeinrichtung an das ISDN-Netz angeschaltet werden. Das Mobilfunknetz 20 versorgt in bekannter Weise zahlreiche Mobilfunkteilnehmer, von denen der Einfachheit halber lediglich ein Mobilfunktelefon 60 dargestellt ist. Bei dem dargestellten Mobilfunknetz 20 handelt es sich beispielsweise um das auf dem GSM-Standard beruhenden Mobilfunksystem. Ferner zeigt Fig. 1 eine zentrale Servicestation 70, die entweder nur mit dem ISDN-Netz 10 oder mit beiden Netzen 10 und 20 verbunden werden kann. Die Aufgaben der Servicestation 70 werden weiter unten noch ausführlicher beschrieben.

Wie bereits eingangs erwähnt, ist es Aufgabe der Erfindung, die Übermittlung von alphanumerischen Zeichen, genauer gesagt von Kurzmitteilungen, sowohl zwischen an das ISDN-Netz 10 angeschalteten Endeinrichtungen, z. B. zwischen den beiden Telefonen 30 und 40, als auch zwischen Endeinrichtungen zu übermitteln, von denen wenigstens eine mit dem ISDN-Netz 10 und wenigstens eine andere mit dem Mobilfunknetz 20 verbunden ist. Dazu bedient sich die Erfindung zum einen dem für den GSM-Mobilfunk definierten SMS-Protokoll, mit dessen Hilfe alphanumerische Kurznachrichten im Punkt-zu-Punkt-Modus mit einer Länge von 140 Bytes und im Rundsendemodus noch mit einer Länge von 82 Bytes übertragen werden können. Zum anderen benutzt die Erfindung ein zwar bekanntes aber noch nicht implementiertes ISDN-Leistungsmerkmal, USBS (User Signalling Bearer Service) genannt, mit dem der SMS-Dienst des Mobilfunkbereichs auch im ISDN-Netz 10 genutzt werden kann. Das USBS-Leistungsmerkmal gewährleistet über das ISDN-Netz 10 eine transparente, paketorientierte Übermittlung von Daten mit einer Länge von bis zu 252 Bytes zwischen zwei Teilnehmeranschlüssen, in unserem Beispiel zwischen den Telefonen 30 und 40. Daher kann das SMS-Dienstleistungsmerkmal auf den USBS-Dienst abgebildet werden. Ein wesentlicher Vorteil des USBS-Dienstes gegenüber dem Dienstleistungsmerkmal UUS1 besteht darin, daß zur Übertragung von alphanumerischen Kurznachrichten nur ein ISDN-Steuerkanal, auch D-Kanal genannt, aufgebaut wird. Der Aufbau einer vollständigen, d. h. auch Nutzkanäle umfassenden ISDN Verbindung erfolgt nicht. Mit anderen Worten ausgedrückt wird die alphanumerische Kurznachricht zwischen zwei ISDN-Teilnehmern über eine rein virtuelle Verbindung übertragen.

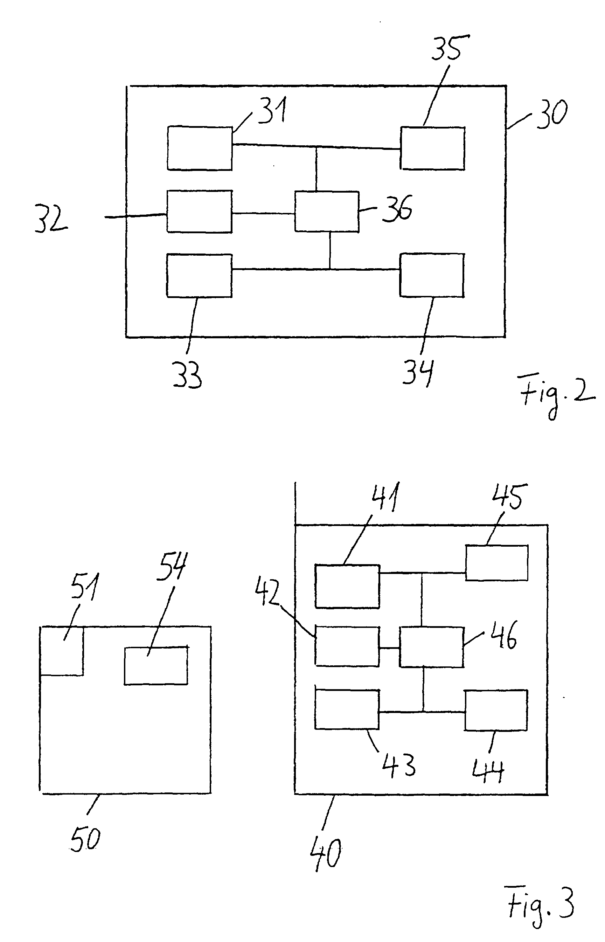

Fig. 2 zeigt ein vereinfachtes Blockschaltbild des an das ISDN-Netz 10 angeschalteten drahtgebundenen Telefons 30, über das alphanumerische Kurznachrichten empfangen und ausgesendet werden können. Das drahtgebundene Telefon 30 weist eine Codiereinrichtung 31 auf, die über eine Tastatur (nicht dargestellt) eingegebene alphanumerische Zeichen gemäß dem SMS-Protokoll codiert. Eine USBS-Umsetzeinrichtung 32 dient dazu, die codierte alphanumerische Nachricht in ein USBS-Übertragungsformat umzusetzen, so daß sie über einen, zum gerufenen Teilnehmer B aufgebauten ISDN-Steuerkanal übertragen werden kann. Ein Beispiel für ein USBS-Übertragungsformat, wie es das drahtgebundene Telefon 30 erzeugen kann, kann wie folgt aufgebaut sein: Ein Feld für die Benutzerinformation mit einer Länge von 1 Byte, ein Feld für einen Nachrichtentyp-Indikator, eine Verwerfung von Kopien, ein Gültigkeits-Periodenformat, einen Wiederholungsrate, einen Benutzer-Datenkopfindikator und einen Status-Bericht-Indikator mit einer Länge von 1 Byte, ein Feld für eine Nachrichtenreferenz mit einer Länge von 1 Byte, ein Zieladressenfeld mit einer Länge von 12 Byte, ein Protokoll-Identifiziererfeld mit der Länge von 1 Byte, ein Datencodierschema-Feld mit der Länge von 1 Byte, ein Gültigkeitsperioden-Feld mit der Länge von 1 bis 7 Byte, ein Feld für die Benutzerdatenlänge mit einer Länge von 1 Byte und ein Benutzerdatenfeld (für die SMS-codierte Kurznachricht im Punkt-zu-Punkt-Modus) mit einer Länge von 140 Byte.

Für den Empfangsmodus enthält das drahtgebundene Telefon 30 eine Decodiereinrichtung 33, die aus der über einen Steuerkanal des ISDN-Netzes 10 im USBS-Übertragungsformat empfangenen, SMS-codierten Nachricht die ursprüngliche alphanumerische Information wiedergewinnt. Da das SMS-Protokoll für den Mobilfunkbereich und das USBS-Leistungsmerkmal für den ISDN-Bereich bereits definiert sind, ist es für den Durchschnittsfachmann ohne weiteres möglich, den SMS-Codierer 31, die USBS-Umsetzeinrichtung 32 und die Decodiereinrichtung schaltungsmäßig oder programmtechnisch zu realisieren. Damit die empfangene und wiedergewonnene alphanumerische Information dem Benutzer des Telefons 30 wiedergegeben werden kann, weist das Telefon 30 ein Display oder eine Sprachwiedergabeeinrichtung 34 auf. In einer Speichereinrichtung 35 können die über die Tastatur eingegebenen alphanumerischen Zeichen und gegebenenfalls auch Zielrufnummern abgelegt werden, so daß die alphanumerische Information beispielsweise erst zu einem späteren Zeitpunkt ausgesendet werden kann. Andererseits dient die Speichereinrichtung 35 auch dazu, die von einer rufenden Endeinrichtung ausgesandten alphanumerischen Informationen abzuspeichern. Eine Steuereinrichtung 36 kann so ausgebildet sein, daß sie die in der Speichereinrichtung 35 abgelegten alphanumerischen Nachrichten zur Steuerung eines vorbestimmten Vorgangs benutzt. Eine mögliche Anwendung dazu könnte so aussehen, daß ein Kunde nicht mehr bei einer Telefonauskunft des ISDN-Netzbetreibers über eine Nutzkanalverbindung anruft, sondern mittels einer Kurznachricht die Rufnummer abfragt, die dann in Form einer alphanumerischen Nachricht über einen ISDN-D-Kanal zum Benutzer des Telefons 30 übertragen wird. Statt die Rufnummer sofort auf dem Display 34 darzustellen oder mittels der Sprachausgabeeinrichtung wiederzugeben, ist es möglich, die in Form einer alphanumerischen Nachricht erhaltene Rufnummer in der Speichereinrichtung 35 abzulegen. Unter Betätigung einer vorbestimmten Taste kann der Benutzer die Steuereinrichtung 36 veranlassen, auf die in der Speichereinrichtung 35 abgelegte Rufnummer zuzugreifen und einen Rufaufbau zu dem Teilnehmer, der zu der abgespeicherten Rufnummer gehört, einzuleiten. Anstelle von Rufnummern können beliebige Steuerdaten, z. B. zur Steuerung von Funktionen der Haus- und Gebäudetechnik (Leuchten ein/ausschalten usw.), als SMS-codierte Kurznachrichten zum Telefon 30 übertragen und im Speicher 35 abgelegt werden. Auf diese gespeicherten Steuerdaten kann die Steuereinrichtung 36 zugreifen und die entsprechenden Steuerfunktionen auslösen.

In Fig. 3 ist das Blockschaltbild des schnurlosen Telefons 40 und der Basisstation 50 dargestellt, die mit dem ISDN-Netz 10 verbunden sind. Die Basisstation 50 weist einen an sich bekannten Netzanschluß 51 zum Anschalten an das ISDN-Telekommunikationsnetz 10 beim Teilnehmer B auf. Es sei vorausgeschickt, daß die Übertragung zwischen der Basisstation 50 und dem schnurlosen Telefon 40 mit Hilfe des DECT-Protokolls (DECT von Digital European Cordless Telecommunication) erfolgt. Erfindungsgemäß enthält die Basisstation 50 eine USBS-DECT-Umsetzeinrichtung 54, die derart ausgebildet ist, daß sie das USBS-Übertragungsformat, in dem die alphanumerischen Nachrichten über eine D-Kanalverbindung des ISDN-Netzes übertragen werden, in ein DECT-Übertragungsformat umsetzt und umgekehrt. Ähnlich dem drahtgebundenen Telefon 30 weist das schnurlose Telefon 40 einen Codierer 41 auf, der eine über eine nicht dargestellte Tastatur eingegebene alphanumerische Nachricht gemäß dem SMS-Protokoll codiert. Eine DECT-Umsetzeinrichtung 42 dient dazu, die SMS-codierte Information in ein DECT-Übertragungsformat umzusetzen, so daß sie über einen Funkkanal zur Basisstation 50 übertragen werden kann. Das schnurlose Telefon 40 weist eine Decodiereinrichtung 43 auf, die aus einer im DECT-Übertragungsformat von der Basisstation 50 erhaltenen, SMS-codierten Information die ursprüngliche alphanumerische Information wiedergewinnt und sie gegebenenfalls über ein Display oder eine Sprachwiedergabeeinrichtung dem Teilnehmer wiedergibt. Darüber hinaus können eine Speichereinrichtung 45 und eine Steuereinrichtung 46 vorgesehen sein, die die gleichen Funktionen und Aufgaben erfüllen wie die entsprechende Speichereinrichtung 35 und Steuereinrichtung 36 des drahtgebundenen Telefons 30.

Das Mobilfunktelefon 60 ist an sich bekannt und braucht daher nicht näher beschrieben zu werden.

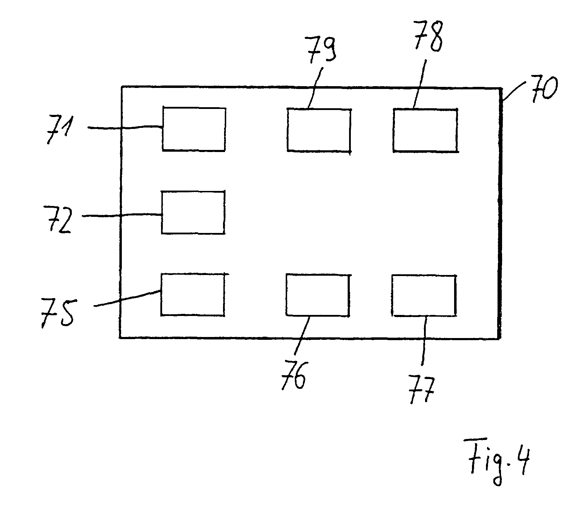

In Fig. 4 ist ein vereinfachtes Blockschaltbild der in Fig. 1 dargestellten zentralen Servicestation 70 gezeigt. Die wichtigste Aufgabe der zentralen Servicestation 70 besteht darin, eine SMS-codierte alphanumerische Nachricht von dem Telefon 30 oder 40 zum Benutzer des Mobilfunktelefons 60 oder umgekehrt zu übertragen. Dazu ist in der Servicestation 70 eine USBS-GSM-Umsetzeinrichtung 78 implementiert, die in der Lage ist, das USBS-Übertragungsformat, in dem die SMS-codierte alphanumerische Nachricht von dem Telefon 30 oder 40 zur Servicestation 70 übertragen wird, in ein GSM-Übertragungsformat umzusetzen, in dem die alphanumerische Nachricht über das Mobilfunknetz 20 zum Mobilfunktelefon 60 übertragen werden kann. Über eine Anschlußeinheit 79 ist die zentrale Servicestation 70 an das ISDN-Netz 10 und/oder über eine Anschlußeinheit 77 an das Mobilfunknetz 20 anschaltbar. Die zentrale Servicestation 70 umfaßt fakultativ einen Codierer 71, der eine eingegebene alphanumerische Nachricht gemäß dem SMS-Protokoll codiert, eine USBS-Umsetzeinrichtung 72, die die SMS-codierte alphanumerische Information in ein USBS-Übertragungsformat umsetzt. Dadurch ist es möglich, uncodierte Kurznachrichten beispielsweise über eine X.25-Schnittstelle einzugeben. Eine Speichereinrichtung 75 kann vorgesehen sein, die SMS-codierte und nicht codierte alphanumerische Informationen sowie eine oder mehrere Zielrufnummern speichert. Ein weiteres Anwendungsgebiet für die Servicestation 70 besceht darin, beispielsweise Abonnementdienste abzuwickeln. Dazu gehört z. B. die periodische Übermittlung von aktuellen Börsen- und Währungsdaten. Diese Aufgabe übernimmt eine Steuereinrichtung 76, indem sie auf die zuvor in der Speichereinrichtung 75 abgelegten Börsendaten und gespeicherten Rufnummern der Abonnenten zugreift, automatisch den Aufbau von ISDN-D-Kanalverbindungen über das ISDN-Netz 10 und /oder von Funkverbindungen über das Mobilfunknetz 20 zu den Abonnenten einleitet und das Rundsenden der gewünschten Daten veranlaßt. Ein anderes Anwendungsbeispiel für die Servicestation 70 sicht vor, daß an das ISDN-Netz 10 und/oder an das Mobilfunknetz 20 angeschaltete Teilnehmer auf zentrale Informationen, die in der Speichereinrichtung 75 abgelegt sind, zugreifen können.

Bei einem weiteren Anwendungsbeispiel, das über die zentrale Servicestation 70 abgewickelt werden kann, möchte beispielsweise der Benutzer des drahtgebundenen Telefons 30 an mehrere Teilnehmer, die sowohl mit dem ISDN-Netz 10 als auch mit dem Mobilfunknetz 20 verbunden sein können, SMS-codierte Nachrichten rundzusenden. Um diese Funktion auszuführen, leitet die Steuereinrichtung 36 des Telefons 30 eine D-Kanal-Verbindung im ISDN-Netz 10 zur Servicestation 70 ein, über die anschließend die gewünschten Zielrufnummern und die rundzusendende alphanumerische Nachricht übertragen wird. Die Zielrufnummern und die alphanumerische Nachricht können anschließend in der Speichereinrichtung 75 der Servicestation 70 zwischengespeichert werden. Der Nutzer des drahtgebundenen Telefons 30 sendet ferner einen SMS-codierten Steuerbefehl zur Servicestation 70, der von der Steuereinrichtung 76 derart interpretiert wird, daß die im Speicher 75 zwischengespeicherte Nachricht an die dort ebenfalls abgelegten Zielrufnummern weiterzusenden ist.

Dank der Einbindung des SMS-Protokolls in das USBS-Protokoll des Euro-ISDN kann eine alphanumerische Kurznachricht zwischen den beiden an das ISDN-Netz 10 angeschalteten Telefonen 30 und 40 übertragen werden. Es sei angenommen, daß das Telefon 30 eine SMS-codierte Nachricht an das Telefon 40 senden möchte. Dann unterstützt dieses Verfahren ferner die Quittierung des Empfangs einer alphanumerischen Nachricht an den sendenden Teilnehmer A. Außerdem können zu sendende alphanumerische Nachrichten in der Speichereinrichtung 35 des sendenden Telefons 30 so lange aufbewahrt werden, bis die Nachricht an dem gerufenen schnurlosen Telefon 40 bestätigt worden ist. Ferner unterstützt das Verfahren einen sogenannten Signalisierungsmechanismus, um das sendende Telefon 30 zu benachrichtigen, wenn weitere alphanumerische Nachrichte vom Telefon 40 empfangen werden können, nachdem beispielsweise mehrere Nachrichten vorher wegen fehlender Speicherkapazität der Speichereinrichtung 45 abgewiesen worden sind.

Die Funktionsweise des erfindungsgemäßen Verfahrens wird nun anhand eines beispielhaften Szenarios kurz erläutert. Wiederum sei angenommen, daß der Teilnehmer A am drahtgebundenen Telefon 30 eine Kurznachricht an den Teilnehmer B übertragen möchte. Der Teilnehmer A wählt zunächst an seinem drahtgebundenen Telefon 30 aus, ob er eine alphanumerische Nachricht im Punkt-zu-Punkt-Modus oder im Rundsendemodus übertragen möchte. Es sei angenommen, daß der Teilnehmer A eine Punkt-zu-Punkt-Verbindung zum Teilnehmer B aufbauen möchte. Zunächst gibt der Teilnehmer A die Zielrufnummer des Teilnehmers B ein, an den die Nachricht versandt werden soll. Das Telefon 30 stellt dem Teilnehmer A einen Nachrichteneditor zur Verfügung, mit dessen Hilfe er über ein Tastenfeld die gewünschte alphanumerische Nachricht eingeben kann. Der Codierer 31 codiert die eingegebene alphanumerische Nachricht gemäß dem SMS-Protokoll. Anschließend wird die SMS-codierte Nachricht in der USBS-Umsetzeinrichtung 32 in ein USBS-Übertragungsformat umgesetzt, in dem die codierte Nachricht über eine D-Kanal-Verbindung des ISDN-Netzes 10 übertragen werden kann. Die Steuereinrichtung 36 leitet unter Anwendung des USBS-Protokolls den Aufbau der D-Kanal-Verbindung zum Teilnehmer B ein und veranlaßt die Übertragung der SMS-codierten Nachricht. Die im USBS-Übertragungsformat an der Basisstation 50 des Teilnehmers B empfangene SMS-codierte Nachricht wird in der USBS-DECT-Umsetzeinrichtung 54 der Basisstation 50 in ein entsprechendes DECT-Übertragungsformat umgesetzt. Die SMS-codierte Nachricht wird in dem DECT-Übertragungsformat danach über einen Funkkanal zum schnurlosen Telefon 40 übertragen. In der Decodiereinrichtung 43 wird die im DECT-Übertragungsformat empfangene SMS-codierte Nachricht decodiert und beispielsweise auf dem Display 44 dem Teilnehmer B dargestellt.

### Bezugszeichenliste

- 10: ISDN-Netz
- 20: Mobilfunknetz
- 30: drahtgebundene Endeinrichtung, z.B. Telefon
- 31: Codiereinrichtung
- 32: USBS-Umsetzeinrichtung
- 33: Decodiereinrichtung
- 34: Display oder Sprachausgabeeinrichtung
- 35: Speichereinrichtung
- 36: Steuereinrichtung
- 40: schnurloses Telefon
- 41: Codiereinrichtung
- 42: DECT-Umsetzeinrichtung
- 43: Decodiereinrichtung
- 44: Display
- 45: Speichereinrichtung
- 46: Steuereinrichtung
- 50: Basisstation
- 51: ISDN-Netzanschluß
- 54: USBS-DECT-Umsetzeinrichtung
- 60: Mobilfunktelefon
- 61: Codierer
- 62: Umsetzeinrichtung
- 63: Decodiereinrichtung
- 64: Display
- 65: Speichereinrichtung
- 66: Steuereinrichtung
- 70: Servicestation
- 71: Codierer
- 72: USBS-Umsetzeinrichtung
- 75: Speichereinrichtung
- 76: Steuereinrichtung
- 77: Anschlußeinrichtung
- 78: USBS-GSM-Umsetzeinrichtung
- 79: Anschlußeinheit

## Patentansprüche

1. Verfahren zur Übertragung von alphanumerischen Zeichen zwischen wenigstens zwei Telekommunikations-Endeinrichtungen (30, 40, 60), von denen wenigstens eine an ein ISDN-Telekommunikationsnetz (10) angeschaltet ist,
**mit dem Schritt:**
a) Eingeben einer oder mehrerer Zielrufnummern und wenigstens einer, ein oder mehrere alphanumerische Zeichen umfassende Information an einer Endeinrichtung (30), **gekennzeichnet durch folgende Verfahrensschritte:**
b) Codieren der eingegebenen Information,
c) Umsetzen der codierten Information in ein vorbestimmtes Übertragungsformat, in dem sie über einen ISDN-Steuerkanal übertragen werden kann,
d) Aufbauen wenigstens einer ISDN-Steuerkanal-Verbindung zu einer gerufenen Endeinrichtung (40; 60) und Übermitteln der in Schritt c) umgesetzten Information darüber,
e) Rückgewinnen der alphanumerischen Information in der oder jeder gerufenen Endeinrichtung und
f) Wiedergeben der rückgewonnen alphanumerischen Information.

2. Verfahren nach Anspruch 1, **dadurch gekennzeichnet, daß** die in Schritt a) eingegebene alphanumerische Information in Schritt b) gemäß dem Kurznachrichten Dienst-(SMS)-Protokoll codiert wird und daß die codierte Information in Schritt c) in ein USBS-(User Signalling Bearer Service)-Übertragungsformat umgesetzt wird.

3. Verfahren nach Anspruch 1 oder 2, **dadurch gekennzeichnet, daß** nach Ausführung des Schritts b) die codierte alphanumerische Information in ein Übertragungsformat, insbesondere in das GSM-Übertragungsformat, umgesetzt wird, in dem sie über ein Mobilfunknetz übermittelt werden kann, und daß in Schritt c) die im Mobilfunk-Übertragungsformat übertragene Information in ein vorbestimmtes Übertragungsformat, in dem sie über einen ISDN-Steuerkanal übertragen werden kann, umgesetzt wird.

4. Verfahren nach Anspruch 1 oder 2, **dadurch gekennzeichnet, daß** nach Schritt d) die umgesetzte alphanumerische Information in ein Übertragungsformat, insbesondere in das GSM-Übertragungsformat, umgewandelt wird, in dem sie über ein Mobilfunknetz übermittelt werden kann.

5. Verfahren nach einem der Ansprüche 1 bis 3, **dadurch gekennzeichnet, daß** nach Schritt d) die umgesetzte alphanumerische Information in ein Übertragungsformat, insbesondere in ein DECT-Übertragungsformat, umgewandelt wird, in dem sie über eine Funkverbindung zu einer schnurlosen Endeinrichtung übermittelt werden kann.

6. Verfahren nach einem der Ansprüche 1 bis 5, **dadurch gekennzeichnet, daß** die oder mehrere Zielrufnummern und/oder die codierte alphanumerische Information in dem GSM- oder USBS-Übertragungsformat zu einer als zentrale Einrichtung benutzten Endeinrichtung übertragen werden, die die empfangene Information zur Weiterübertragung in das USBS- bzw. GSM-Übertragungsformat umsetzt.

7. Verfahren nach Anspruch 6, **dadurch gekennzeichnet, daß** die zentrale Einrichtung die empfangene alphanumerische Information an vorbestimmte Zielrufnummern sendet.

8. Drahtgebundene Telekommunikations-Endeinrichtung, die an ein ISDN-Kommunikationsnetz (10) anschaltbar ist,
**gekennzeichnet durch**
- einen Codierer (31), der eine eingegebene, ein oder mehrere Zeichen umfassende alphanumerische Information gemäß dem Kurznachrichten-Dienst-Protokoll (Short Message Service; SMS) codiert,
- eine Einrichtung (32) zum Umsetzen der codierten Information in ein USBS-Übertragungsformat, so daß die codierte Information über einen ISDN-Steuerkanal übertragbar ist,
- eine Decodiereinrichtung (33), die aus einer im USBS-Übertragungsformat empfangenen, SMS-codierten Information die ursprüngliche alphanumerische Information wiedergewinnt, und
- eine Einrichtung (34) zur optischen und/oder akustischen Wiedergabe der rückgewonnenen alphanumerischen Information.

9. Endeinrichtung nach Anspruch 8, **gekennzeichnet durch** einen Speicher (35) zum Ablegen einer SMS-codierten oder einer nicht codierten alphanumerischen Information und/oder einer oder mehreren Zielrunummern.

10. Endeinrichtung nach Anspruch 9, **gekennzeichnet durch** eine Steuereinrichtung (36), die unter Ansprechen auf eine empfangene SMS-codierte Information einen vorbestimmten Vorgang auslöst.

11. Kommunikationsvorrichtung zum Anschalten an ein ISDN-Netz (10) umfassend
a) eine Basisstation (50) mit folgenden Merkmalen:
- ein Netzanschluß (51) zum Anschalten an das ISDN-Telekommunikationsnetz (10) und
- eine Einrichtung (54) zum Umsetzen eines USBS-Übertragungsformats in ein DECT-Übertragungsformat und umgekehrt, sowie
b) eine schnurlose Endeinrichtung (40) mit folgenden Merkmalen:
- ein Codierer (41), der eine eingegebene alphanumerische Information gemäß dem Kurznachrichten-Dienst-Protokoll (SMS von Short Message Service) codiert,
- eine Einrichtung (42) zum Umsetzen der codierten Information in ein DECT-Übertragungsformat, so daß die codierte Information über einen Funkkanal zur Basisstation (50) übertragbar ist,
- eine Decodiereinrichtung (43), die aus einer im DECT-Übertragungsformat von der Basisstation (50) erhaltenen, SMS-codierten Information die ursprüngliche alphanumerische Information wiedergewinnt, und
- eine Einrichtung (44) zur optischen und/oder akustischen Wiedergabe der rückgewonnenen alphanumerischen Information.

12. Kommunikationsvorrichtung nach Anspruch 11, **dadurch gekennzeichnet, daß** die schnurlose Endeinrichtung (40) einen Speicher (45) zum Ablegen einer SMS-codierten oder nicht codierten alphanumerischen Information und/oder wenigstens einer Zielrufnummer aufweist.

13. Kommunikationsvorrichtung nach Anspruch 12, **dadurch gekennzeichnet, daß** die schnurlose Endeinrichtung (40) eine Steuereinrichtung (46) aufweist, die unter Ansprechen auf einer empfangenen SMS-codierten Information einen vorbestimmten Vorgang auslöst.

14. Zentrale Kommunikationsvorrichtung, die die Übertragung von alphanumerischen Informationen zwischen wenigstens einer, an ein ISDN-Netz (10) angeschalteten Endeinrichtung (30, 40) und wenigstens einer, an ein Mobilfunknetz (20) angeschalteten Mobilfunk-Endeinrichtung (60) und in umgekehrter Richtung ermöglicht, umfassend
- eine Schnittstelle (79) zum Anschalten an das ISDN-Netz (10),
- eine Anschlußeinheit (77) zum Senden und Empfangen eines eine SMS-codierte alphanumerische Information enthaltenden GSM-Übertragungsformats, und
- eine erste, mit der Schnittstelle (79) und der Anschlußeinheit (77) verbundenen Einrichtung (78) zum Umsetzen eines USBS-Übertragungsformats, in dem eine SMS-codierte alphanumerische Information über einen ISDN-Steuerkanal übertragbar ist, in ein GSM-Übertragungsformat zur Übertragung der SMS-codierten Information über ein Mobilfunknetz und umgekehrt.

15. Zentrale Kommunikationsvorrichtung nach Anspruch 14, **gekennzeichnet durch**
- eine Speichereinrichtung (75) zum Ablegen von einer oder mehreren alphanumerischen Informationen und /oder einer oder mehreren Zielrufnummern und
- eine Steuereinrichtung (76), die unter Ansprechen auf eine oder mehrere gespeicherte Zielrufnummer jeweils einen Verbindungsaufbau zu jedem, der jeweiligen Zielrufnummer zugeordneten Teilnehmer einleitet.

16. Zentrale Kommunikationsvorrichtung nach Anspruch 14 oder 15, **gekennzeichnet durch**
- einen Codierer (71), der eine eingegebene, ein oder mehrere Zeichen umfassende alphanumerische Information gemäß dem Kurznachrichten-Dienst-Protokoll (Short Message Service; SMS) codiert, und
- eine zweite Einrichtung (72) zum Umsetzen der codierten Information in ein USBS-Übertragungsformat, so daß die codierte Information über einen ISDN-Steuerkanal übertragbar ist.

## Claims

1. Method for the transmission of alphanumeric characters between at least two telecommunications terminal devices (30, 40, 60), of which at least one is connected to an ISDN telecommunications network (10),
with the step:
a) inputting on a terminal device (30) of one or more destination call numbers and at least one item of information comprising one or more alphanumeric characters,
**characterized by** the following method steps:
b) coding of the inputted information;
c) conversion of the coded information into a predetermined transmission format in which it can be transmitted over an ISDN control channel;
d) setting up of at least one ISDN control channel connection to a called terminal device (40; 60) and transfer thereby of the information converted in step c);
e) recovery of the alphanumeric information in the or each called terminal device and
f) reproduction of the recovered alphanumeric information.

2. Method according to claim 1, **characterized in that** the alphanumeric information inputted in step a) is coded in step b) according to the short message service (SMS) protocol and the coded information is converted in step c) into a USBS (User Signalling Bearer Service) transmission format.

3. Method according to claim 1 or 2, **characterized in that**, after execution of step b), the coded alphanumeric information is converted into a transmission format, more particularly into the GSM transmission format, in which it can be transferred over a mobile radio network, and **in that** in step c) the information transmitted in the mobile radio transmission format is converted into a predetermined transmission format in which it can be transmitted over an ISDN control channel.

4. Method according to claim 1 or 2, **characterized in that**, after step d), the converted alphanumeric information is converted into a transmission format, more particularly into the GSM transmission format, in which it can be transferred over a mobile radio network.

5. Method according to any one of claims 1 to 3, **characterized in that**, after step d), the converted alphanumeric information is converted into a transmission format, more particularly into a DECT transmission format, in which it can be transferred over a radio connection to a cordless terminal device.

6. Method according to any one of claims 1 to 5, **characterized in that** the or a plurality of destination call numbers and/or the coded alphanumeric information is transmitted in the GSM or USBS transmission format to a terminal device used as a central device, said terminal device converting the received information into the USBS or GSM transmission format for onward transmission.

7. Method according to claim 6, **characterized in that** the central device sends the received alphanumeric information to predetermined destination call numbers.

8. Wire-bound telecommunications terminal device, said telecommunications terminal device being connectable to an ISDN communications network (10), **characterized by**
- a coder (31) which codes an inputted item of alphanumeric information comprising one or more characters according to the short message service (SMS) protocol;
- a device (32) for converting the coded information into a USBS transmission format, with the result that the coded information can be transmitted over an ISDN control channel;
- a decoding device (33) which recovers the original alphanumeric information from an SMS-coded item of information received in the USBS transmission format; and
- a device (34) for visual and/or audible reproduction of the recovered alphanumeric information.

9. Terminal device according to claim 8, **characterized by** a storage means (35) for storing an SMS-coded or non-coded item of alphanumeric information and/or one or more destination call numbers.

10. Terminal device according to claim 9, **characterized by** a control device (36), said control device (36) triggering a predetermined action in response to a received SMS-coded item of information.

11. Communications device for connection to an ISDN network (10) comprising
a) a base station (50) with the following features:
- a network port (51) for connection to the ISDN telecommunications network (10) and
- a device (54) for converting a USBS transmission format into a DECT transmission format and vice versa, as well as
b) a cordless terminal device (40) with the following features:
- a coder (41) which codes an inputted item of alphanumeric information according to the short message service (SMS) protocol;
- a device (42) for converting the coded information into a DECT transmission format, with the result that the coded information can be transmitted over a radio channel to the base station (50);
- a decoding device (43) which recovers the original alphanumeric information from an SMS-coded item of information received in the DECT transmission format from the base station (50); and
- a device (44) for visual and/or audible reproduction of the recovered alphanumeric information.

12. Communications device according to claim 11, **characterized in that** the cordless terminal device (40) has a storage means (45) for storing an SMS-coded or non-coded item of alphanumeric information and/or at least one destination call number.

13. Communications device according to claim 12, **characterized in that** the cordless terminal device (40) has a control device (46), said control device (46) triggering a predetermined action in response to a received SMS-coded item of information.

14. Central communications device, said central communications device enabling the transmission of alphanumeric information between at least one terminal device (30, 40) connected to an ISDN network (10) and at least one mobile radio terminal device (60) connected to a mobile radio network (20) and in the opposite direction, comprising
- an interface (79) for connection to the ISDN network (10);
- a connection unit (77) for sending and receiving a GSM transmission format containing an SMS-coded item of alphanumeric information; and
- a first device (78), connected to the interface (79) and to the connection unit (77), for converting a USBS transmission format, in which an SMS-coded item of alphanumeric information can be transmitted over an ISDN control channel, into a GSM transmission format for transmission of the SMS-coded item of information over a mobile radio network and vice versa.

15. Central communications device according to claim 14, **characterized by**
- a storage device (75) for storing one or more items of alphanumeric information and/or one or more destination call numbers and
- a control device (76), said control device (76) initiating, in response to one or more stored destination call numbers, a call setup to each of the subscribers associated with each of the destination call numbers.

16. Central communications device according to claim 14 or 15, **characterized by**
- a coder (71) which codes an inputted item of alphanumeric information comprising one or more characters according to the short message service (SMS) protocol; and
- a second device (72) for converting the coded information into a USBS transmission format, with the result that the coded information can be transmitted over an ISDN control channel.

## Revendications

1. Procédé de transmission de caractères alphanumériques entre au moins deux équipements terminaux de télécommunications (30,40,60), parmi lesquels au moins un est connecté à un réseau de télécommunications RNIS (10), **comportant la procédure suivante :**
a) entrée dans un équipement terminal (30) d'un ou plusieurs numéros d'appel cibles et d'au moins une information comprenant un ou plusieurs caractères alphanumériques,
**et caractérisé par les étapes suivantes :**
b) codage de l'information entrée,
c) conversion de l'information entrée dans un format de transmission prédéterminé, dans lequel elle peut être transmise par un canal de commande RNIS,
d) établissement d'au moins une connexion du canal de commande RNIS à un équipement terminal appelé (40; 60) et transmission de l'information convertie en c) par cette connexion,
e) récupération de l'information alphanumérique dans le ou chaque équipement terminal appelé et
f) reproduction de l'information alphanumérique récupérée.

2. Procédé selon la revendication 1, **caractérisé en ce que** l'information alphanumérique entrée à l'étape a) est codée à l'étape b) selon le protocole du service de messages courts (SMS) et que l'information codée est convertie à l'étape c) dans un format de transmission USBS (User Signalling Bearer Service).

3. Procédé selon la revendication 1 ou 2, **caractérisé en ce que**, après l'exécution de l'étape b), l'information alphanumérique codée est convertie dans un format de transmission, notamment dans le format GSM, dans lequel elle peut être transmise par un réseau de téléphonie mobile et qu'à l'étape c), l'information transmise en format de transmission de téléphonie mobile est convertie dans un format prédéterminé, dans lequel elle peut être transmise via un canal de commande RNIS.

4. Procédé selon la revendication 1 ou 2, **caractérisé en ce que** après l'étape d), l'information alphanumérique convertie est transformée dans un format de transmission, notamment au format de transmission GSM, dans lequel elle peut être transmise par un réseau de téléphonie mobile.

5. Procédé selon l'une des revendications 1 à 3, **caractérisé en ce que**, après l'étape d), l'information alphanumérique convertie est transformée en format de transmission, notamment en un format de transmission DECT, dans lequel elle peut être transmise via une liaison radio à un équipement terminal sans fil.

6. Procédé selon l'une des revendications 1 à 5, **caractérisé en ce que** le ou les numéros d'appel cibles et/ou l'information alphanumérique codée sont transmises en format de transmission GSM ou USBS à un équipement terminal utilisé comme équipement central, qui convertit l'information reçue pour une retransmission en format de transmission USBS ou GSM.

7. Procédé selon la revendication 6, **caractérisé en ce que** l'équipement central envoie l'information alphanumérique reçue à des numéros d'appel cibles prédéterminés.

8. Equipement terminal de télécommunication filaire, connectable à un réseau de télécommunication RNIS (10), **caractérisé en ce qu'**il comprend
- un codeur (31), qui codifie une information alphanumérique entrée comprenant un ou plusieurs caractères selon le protocole de service des messages courts (Short Message Service - SMS),
- un dispositif (32) destiné à convertir l'information codée au format de transmission USBS, de telle sorte que l'information codée soit transmissible par un canal de commande RNIS,
- un dispositif de décodage (33) qui récupère l'information alphanumérique originale à partir d'une information codée en SMS, reçue dans un format de transmission USBS, et
- un dispositif (34) de restitution optique et/ou acoustique de l'information alphanumérique récupérée.

9. Equipement terminal selon la revendication 8, **caractérisé en ce qu'**il comprend une mémoire (35) destinée à enregistrer une information numérique codée en SMS ou non codée et/ou un ou plusieurs numéros d'appel cibles.

10. Equipement terminal selon la revendication 9, **caractérisé en ce qu'**il comprend un dispositif de commande (36), qui déclenche un processus prédéterminé en réaction à une information reçue codée en SMS.

11. Appareil de communication destiné à être connecté à un réseau RNIS (10) comprenant
a) une station de base (50) comportant les éléments suivants :
- un raccordement au réseau (51) pour la connexion au réseau de télécommunications RNIS (10) et
- un dispositif (54) de conversion d'un format de transmission USBS dans un format DECT et vice-versa, et
b) un équipement terminal sans fil (40) doté des attributs suivants :
- un codeur (41), qui codifie une information alphanumérique entrée selon le protocole de service des messages courts (Short Message Service - SMS),
- un dispositif (42) destiné à convertir l'information codée au format de transmission DECT, de telle sorte que l'information codée soit transmissible par un canal radio vers la station de base (50),
- un dispositif de décodage (43) qui récupère l'information alphanumérique originale à partir d'une information codée en SMS, reçue de la station de base (50) en format de transmission DECT, et
- un dispositif (44) de restitution optique et/ou acoustique de l'information alphanumérique récupérée.

12. Equipement de communication selon la revendication 11, **caractérisé en ce que** l'équipement terminal sans fil (40) comporte une mémoire (45) destinée à enregistrer une information numérique codée en SMS ou non codée et/ou au moins un numéro d'appel cible.

13. Equipement de communication selon la revendication 12, **caractérisé en ce que** l'équipement terminal sans fil (40) comprend un dispositif de commande (46), qui déclenche un processus prédéterminé en réaction à une information reçue codée en SMS.

14. Equipement central de communication qui permet la transmission d'informations alphanumériques entre au moins un équipement terminal (30,40) relié à un réseau RNIS (10) et au moins un équipement terminal de téléphonie mobile (60) relié à un réseau de téléphonie mobile (20) et vice-versa, comprenant
- une interface (79) de connexion au réseau RNIS (10),
- une unité de raccordement (77) destinée à envoyer et à recevoir un format de transmission GSM contenant une information alphanumérique codée en SMS, et
- un premier dispositif (78) relié à l'interface (79) et à l'unité de raccordement (77) destiné à convertir un format de transmission USBS, dans lequel une information alphanumérique codée en SMS est transmissible par un canal de commande RNIS, en un format de transmission GSM pour transmettre l'information codée en SMS par un réseau de téléphonie mobile et vice-versa.

15. Equipement central de communication selon la revendication 14, **caractérisé en ce qu'**il comporte
- un élément de mémoire (75) destiné à stocker une ou plusieurs informations alphanumériques et/ou un ou plusieurs numéros de téléphone cibles et_
- un dispositif de commande (76) qui, réagissant à un ou plusieurs numéros d'appel cibles mémorisés, établit respectivement une liaison vers chaque abonné correspondant au numéro d'appel cible respectif.

16. Equipement central de communication selon la revendication 14 ou 15, **caractérisé en ce qu'**il comporte
- un codeur (71), qui codifie une information alphanumérique entrée, comprenant un ou plusieurs caractères, selon le protocole de service des messages courts (Short Message Service - SMS),
- un second dispositif (72) destiné à convertir l'information codée au format de transmission USBS, de telle sorte que l'information codée soit transmissible par un canal de commande RNIS.
